Europäisches Patentamt

European Patent Office

Office européen des brevets

(11) Publication number:

# 0 070 458
A2

## EUROPEAN PATENT APPLICATION

(21) Application number: 82106083.7

(22) Date of filing: 07.07.82

(51) Int. Cl.³: G 06 F 11/26

(30) Priority: 16.07.81 JP 111855/81

(43) Date of publication of application: 26.01.83
Bulletin 83/4

(84) Designated Contracting States: DE FR GB

(71) Applicant: Matsushita Electronics Corporation, 1006,
Oaza-Kadoma Kadoma-shi, Osaka 571 (JP)

(72) Inventor: Kasuya, Kiyotaka, 7-32, Yahata-machi,
Takatsuki City 569 (JP)

(74) Representative: Kirschner, Klaus Dieter et al,
Patentanwälte Kirschner & Grosse
Herzog-Wilhelm-Strasse 17, D-8000 München 2 (DE)

(54) Single chip microcomputer.

(57) A single chip microcomputer comprising an instruction decoder (1) and function circuit (2) such as ROM, RAM, ALU, or the like, is further provided with parallel input shift register (4 or 12), which receives data of output terminals $C_1$, $C_2 \ldots C_N$ of the instruction decoder (1) at its respective stages in the corresponding order. Output signals of the shift register (4 or 12) are transferred to the external terminal (11) of to data bus (13) by means of gate means (9 or 15) upon receiving thereby of testing mode control signal from a testing mode control circuit (5). Thereby, by means of the testing mode control signal, the test output signal of the instruction decoder is issued to the external terminal only during the testing mode.

By means of direct testing of the instruction decoder (1), the testing step is much simplified and testing time length is drastically shortened, thereby, production yield is improved and manufacturing cost is decreased.

PATENTANWÄLTE

**KLAUS D. KIRSCHNER**      **WOLFGANG GROSSE**

DIPL.-PHYSIKER              DIPL.-INGENIEUR

0070458

Matsushita Electronics Corporation

Osaka-fu, Japan

ZUGELASSENE VERTRETER VOR DEM EUROPÄISCHEN PATENTAMT

HERZOG-WILHELM-STR. 17
D-8 MÜNCHEN 2

IHR ZEICHEN:
YOUR REFERENCE:

UNSER ZEICHEN:
OUR REFERENCE: H 4400 K

## Single chip microcomputer

DATUM: July 7 , 1982

The present invention relates to an improvement in a single chip microcomputer suitable for quicker testing than the conventional ones by providing some circuit configuration for the testing.

### Description of the Prior Art:

Integration of single chip microcomputer of a large scale integration (LSI) construction, wherein principal constituting elements of a microcomputer, such as a ROM (read only memory), a RAM (random access memory), an instruction decoder, an ALU (arithmetic logic unit), an input/output circuits, and the like are integrated in a single semiconductor substrate, becomes very high, together with the development of the manufacturing technology of semiconductor integration circuits for realizing advances of its function and performance characteristic develops. For example, it is a trend that in a single LSI, not only the principal constituting element, but also interrupt control circuit, internal timer, serial input/output circuit, and the like as additional functional parts are added on the same chip, and that instruction system are strengthened and number of instruction is increased.

Accordingly, the testing of functions of the microcomputer becomes complex and the testing time becomes longer.

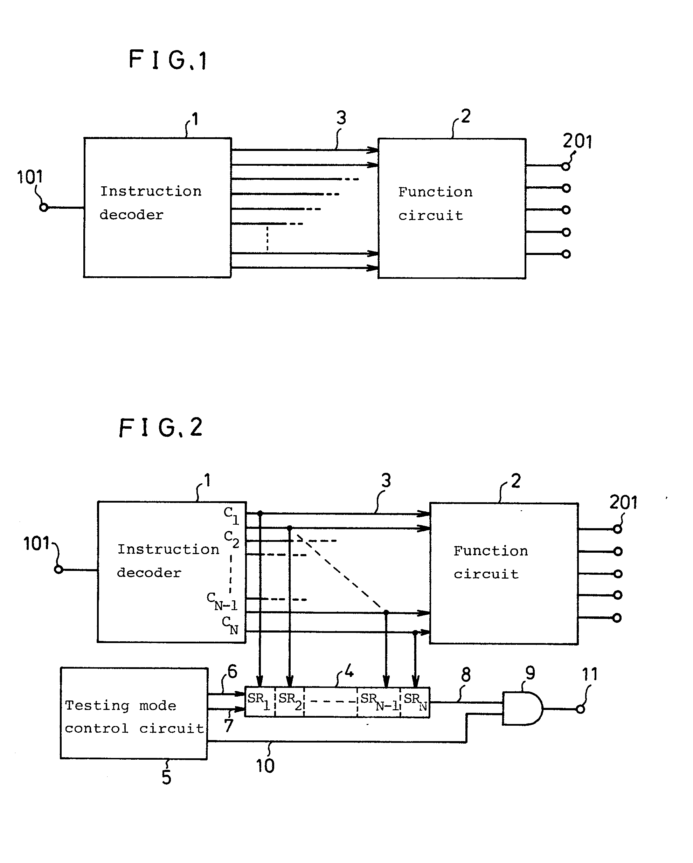

FIG. 1 is a block diagram of a principal function parts of an exemplary construction of a conventional microcomputer, wherein instruction decoder 1 and function circuit 2 such as ALU, RAM or the like are connected by signal lines 3 to send control signals from the former to the latter. Instruction of the microcomputer is decoded by the instruction decoder 1 and the control signals corresponding to the instruction is given from the instruction decoder 1 through the lines 3. The function circuit 2 is controlled by the control signals. When an instruction is made to carry out, the instruction decoder 1 issues a set of control signals, which consist of signals of a first group (hereinafter referred to as signals A) which are for controlling principal actions of the instructions and signals of a second group (hereinafter referred to as signals B) which are for controlling auxiliary actions of the instruction. That is the signals B inhibit actions other than those made by the signals A, for example, lock control and gate control necessary for the actions. In the conventional microcomputer, the testing has been made by examining the resultant outputs of the function circuit 2, since the signal lines 3 are not lead out of the microcomputer LSI. In other words, the parallel testing or indivisual testing element of the instruction decoder 1 and the function circuit 2 are not possible for the conventional microcomputer. Accordingly, operation test of the function element 2 (hereinafter referred to as test B), which is controlled by the signal B, is principally difficult, and the test process is very complex. This is because, in the test B, the test is made indirectly through testing of the outputs of the function circuit 2. Furthermore, the testing time becomes very long as number N of executions of the instructions increases.

Now, let's take one idealized simplified example of microcomputer where number of instruction is N. In this example, sum of the number of executions of instructions to test the operation made by the signal A (hereinafter referred to as test A) and the number of executions of instruxtions of the above-mentioned test B is the number of executions of all the instructions for the test. The former number for A testing is 2N, which is sum of N for executions of N instructions of testings and another N for executions of N instructions for outputtings the results of the testings to the function circuit 2. The latter number for testings B is 2N(N-1), which is sum of a number N(N-1) that, for each of the N instructions executions of remaining (N-1) instructions must be done for testings, and another N(N-1) that is the number of instructions for executions of outputtings the results of the above-mentioned $N(N-1)$ testings to the output terminals. Accordingly, by summing the testings' A number $2N$ for testing A and the testings' B number $2N(N-1)$, the total number of testings for the microcomputer of the idealized N instructions becomes $2N^2$.

Since the total number of testings becomes $2N^2$, the total testing time length for the microcomputer having N instructions becomes:

$2N^2 \times$ [Average time length of testing of one instruction].

Therefore, the total testing time length becomes extraordinarily long as the number N of instructions increases, that is, the total testing time length increases in proportion to square of number N.

Summary of the Invention

The present invention purposes to solve the above-mentioned problem of the conventional microcomputer.

More particularly, the present invention purposes to shorten the testing time of single chip microcomputer having a large instructing number.

The single chip microcomputer in accordance with the present invention can attain shortening of the testing time by means of circuit configuration to enable testing of its instruction decoder independently from its function circuit, and thereby, further advantage of simplification of testing operations. The circuit configuration to enable such testing is activated only during the testing.

Brief Explan ation of the Drawing

FIG. 1 is the circuit block diagram of the exemplary conventional single chip microcomputer.

FIG. 2 is a circuit block diagram of an example of single chip microcomputer embodying the present invention.

FIG. 3 is a circuit block diagram of another example of single chip microcomputer embodying the present invention.

Description of the Preferred Embodiments

Single chip microcomputer in accordance with the present invention comprises a function circuit such as ROM, RAM, ALU or the like, an instruction decoder for issuing controlling signals to the function circuit,

and is characterized by further comprising

a shift register connected by input terminals of its respective stages to respective output terminals of the instruction decoder, and

a control means to control issuing of output signal of the shift register to output terminal in a manner to issue the output only when a testing mode is selected.

In the above-mentioned configuration of the single chip microcomputer in accordance with the present invention, the shift register may be a parallel input/ serial output type or a parallel input parallel output type. When the shift register is the parallel input serial output type, the outputs of the shift register are issued through a signal switching circuit to output terminal. When the shift register is the parallel input parallel output type, the outputs of the shift register may be issued through data bus to output terminal.

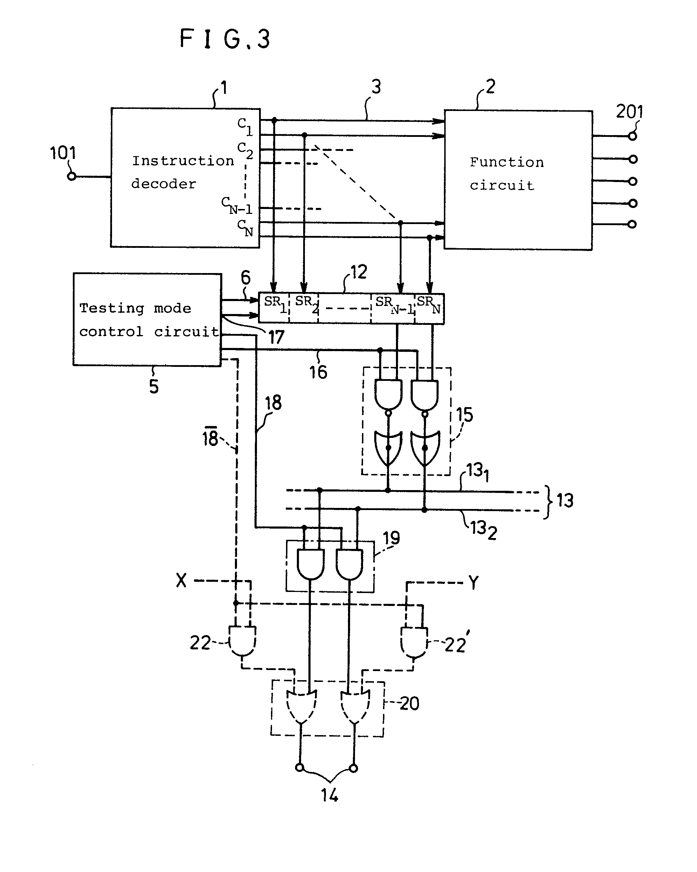

Detailed description of preferred embodiment is made herein in reference to the attached FIGs. 2 and 3 which are circuit block diagram of the first and second embodiments, respectively.

In FIG. 2, a first example, an instruction decoder 1 has N output terminals $C_1$, $C_2$, ...... $C_N$ for outputting decoded signals to a function circuit, such as ROM, RAM, ALU or the like. The output terminals $C_1$, $C_2$ ... $C_N$ are connected to respective input terminals of a first stage to a last stage $SR_1$, $SR_2$ ... $SR_N$ of corresponding order of a parallel input serial output shift register 4 having the input terminals of the same number as that (N) of the output terminals $C_1$, $C_2$ ... $C_N$, besides the connections to respective input terminals of the fuction circuit 2. A testing mode control circuit 5 is

·connected so as to give its mode control signal to the shift register 4 to make the shift register 4 to operate, and a gating signal to an AND gate 9 to open it to pass the output signal 8 of the shift register to an output terminal 11.

The FIG. 2 example operates as follows:

When the instruction decoder 1 receives certain instructions through its input terminal 101 from a ROM, RAM or a memory (not shown), then the instruction decoder 1 decodes the instructions and outputs the control signals from the output terminals $C_1$, $C_2$ ... $C_N$. These control signals are then inptut in parallel manner into the corresponding stages $SR_1$, $SR_2$ ... $SR_N$ of the shift register 4. Then as each one pulse of serial transfer clock pulses is impressed through an input terminal 7 on the shift register 4, the data in respective stages of the shift register 4 shift to the stages next thereto. The outputs from the last stage of the shift register 4 are given to the AND circuit 9, and passes there to the output terminal 11 when a gate control signal 10 is given from the testing mode control circuit 5. The output control signal 10 is the signal which is controlled at high level "H" when the test of the microcomputer is carried out and low level "L" when the microcomputer is used for its ordinary usage. Therefor, in the ordinary usage mode, the output signals of the shift

register 4 are stopped of its going out to the output terminal 11. "Therefore, in the circuit of this embodiment, the output signals of the instruction decoder 1 are directly taken out as such through the parallel input shift register 4, the above-mentioned testing B becomes very easy in comparison with conventional case of FIG. 1 where the testing B is observed only through the data of the output signal of the function circuit 2." In this example, when one data-operation is finished for one instruction, another instruction is given to the instruction decoder 2, and the similar data-operation is made. When the number of data is N, the number of executions of instructions in a complete testing is determined as a sum of the number of executions in testing A and the number of executions in testing B. The former number is 2N, which is the same as that in the conventional circuit of FIG. 1; and the latter number is N, since all the outputs of the instruction decoder 1 can be tested by N executions of the instructions of testing in this circuit configuration. Therefore the total number of testings for the microcomputer becomes only 3N, which is very much smaller than $2N^2$ of the conventional microcomputer of FIG. 1.

FIG. 3 shows another example embodying the present invention, wherein output data of a parallel input parallel output shift register 12, in which the output data of the instruction decoder are taken, are lead out
to output terminal 14 through data bus 13, which is
usually installed in the microcomputer.

In FIG. 3, an instruction decoder has N output
terminals $C_1$, $C_2$, ...... $C_N$ for outputting decoded signals
to a function circuit, such as ROM, RAM, ALU or the like.
The output terminals $C_1$, $C_2$ ... $C_N$ are connected to respective input terminals of a first stage to last stage $SR_1$,
$SR_2$ ... $SR_N$ of a parallel input parallel output shift
register 12 having the input terminals of the same number
as that (N) of the output terminals $C_1$, $C_2$ ... $C_N$ besides
the connections to respective input terminals of the
function circuit 2. Testing A mode control circuit 5 is
connected so as to give its mode control signal to the
shift register 4 to make the shift register 12 to operate.
Output terminals of the lowest several bits ($SR_N$ and
$SR_{N-1}$ for this example, which is assumed to have only two
lines $13_1$ and $13_2$ in data bus for simplicity of elucidation)
of the shift register 12 are connected through a gate circuit
block 15 to the data bus 13. And the data bus 13 are further
connected by AND gate block 19 through a OR gate block 20 to
output terminals 14. Transfer control signal 16 and gate control
signal 18 are given to the gate circuit block 15 and the AND gate
block 19 from the testing mode control circuit 5. The OR gates
20 and AND gates 22 and 22' are optional circuits provided

.for enabling utilization the testing output terminals 14 in common with output signals X and Y for functions other than the testing in ordinary microcomputer use. The AND gates 22 and 22' receive gate control signals $\overline{18}$ which is opposite to that of the gate control signal 18 from the testing mode control circuit 5.

The operation of FIG. 3 example is as follows:

When the instruction decoder 1 receive certain instructions through its input terminal 101 from a ROM, RAM or a memory (not shown), then the instruction decoder 1 decodes the instructions and outputs the control signals from the output terminals $C_1$, $C_2$ ... $C_N$. These control signals are then input in parallel manner into the corre-

sponding stages $SR_1$, $SR_2$ ... $SR_N$ of the shift register 12.

Then the data in the lowest two bits, i.e., $SR_{N-1}$ and $SR_N$

are transferred to the data bus 13 through the wired NOR gates 15 upon receipt of transfer control signal 16. If the example would have j data bus, then lowest j bits are connected through a wired NOR gates 15 with j sets of gates. In this instance, output terminal 17 of the testing mode controller 5 issues no serial transfer signal. Then the data on the data bus 13 are lead out to the output terminals 14 through the AND gates, which is controlled by the gate control signals 18. When the output terminals 14 is used commonly with outputting of other data X and Y of ordinary use, the additional OR gates 20 and AND gates 22 and 22' are to be provided between the AND gate 19 and the output terminals 14, and the gate control signal $\overline{18}$

(which is opposite to that of the gate control signal 18) is given to the AND gates 22 and 22'. After completion of the above-mentioned steps, the testing mode control circuit 5 sends serial transfer clock signal from the output terminal 17 to the shift register 12, and shifts the data in the shift register 12 by clock pulses. Thereafter in the next repetition of the above steps, another 2 bits data are issued at the output terminals 14. Such processes are repeatedly carried out until all the data in the shift register 12 transferred to the output terminals. Then, subsequently, another instruction is given to the instruction decoder, for the next cycle of the same testing procedure.

The example of FIG. 3 has an advantage that time length for signal processing of the stage after the data bus can be shortened in comparison with the example of FIG. 2, and such advantage is remarkable when number of data bus is large.

In summarizing the above, the present invention enables the testing of the instruction decoder 1 independently from the testing of the function circuit 2, and therefore, testing of the instruction decoder 1 becomes easy and quick by directly obtaining data therefrom to the output terminals 14.

0070458

-12-

What is claimed is

1.    A single chip microcomputer comprising

a function circuit and

an instruction decoder for issuing controlling signals to said function circuit,

and is characterized by further comprising

a shift register (4, 12) connected by its input terminals of its respective stages to respective output terminals of said instruction decoder, and

a control means (5+9, 5+15+19) to control issuing of output signals of said shift register to external terminal (11, 14) in a manner to issue said output only when a testing mode is selected.

2.    A single chip microcomputer in accordance with claim 1, wherein said control means comprises

a testing mode control circuit (5) for selecting said testing mode and

a gate means (9, 15+19) for controlling transmission of said output signal to said external terminal (11, 14) responding to mode control signal from said testing mode control circuit (5).

3.    A single chip microcomputer in accordance with claim 2, wherein

said shift register is a parallel input serial output shift register (4) and

said gate means is an AND gate (9) connected between output terminal of said parallel input serial output shift register (4) and an external output terminal (11), said AND gate (9) receiving mode control signal from said testing mode control circuit (5).

4. A single chip microcomputer in accordance with claim 2, wherein

said shift register is a parallel input parallel output shift register (12) and

said gate means comprises a first gates (15) connected between lowest several bits output terminals of said parallel input parallel output shift register (12) and data bus of said several number and second gates (19) connected between said data bus and external terminals (14), said first gates (15) and said second gates (19) receiving mode control signals from said testing mode control circuit (5).

5. A single chip microcomputer in accordance with claim 4, which further comprises

OR gates (20) connected between said AND gates (19) and said external terminals (14) and

AND gates (22 & 22') through which data line for ordinary usage is connected to said OR gates (20), said AND gates receiving mode control signal from said testing mode control circuit (5).

FIG.1

FIG.2

F I G. 3